# FASCICULE DE BREVET EUROPEEN

(11) **EP 2 406 047 B1**
(45) Date de publication et mention de la délivrance du brevet: **19.06.2013**
(21) Numéro de dépôt: 10707044.3
(22) Date de dépôt: 08.03.2010
(51) Int. Cl.: B29B 9/12, B29B 9/16, C08J 3/12, B29C 47/10

(54) **PROCEDE DE FABRICATION ET DE MANUTENTION DE GELS THERMOPLASTIQUES ELASTOMERES**
VERFAHREN ZUR HERSTELLUNG UND HANDHABUNG ELASTOMERER THERMOPLASTISCHER GELE
METHOD FOR MANUFACTURING AND HANDLING ELASTOMER THERMOPLASTIC GELS

(30) Priorité: 11.03.2009 FR 0951514
(43) Date de publication de la demande: 18.01.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: ABAD, Vincent, F-63400 Chamalieres (FR); MUS, Jean-Marie, F-63200 Marsat (FR)
(74) Mandataire: Reynaud, Georges
(86) Numéro de dépôt international: PCT/EP2010/052896
(87) Numéro de publication internationale: WO 2010/102973

(56) Documents cités:
- FR-A- 2 340 358
- US-A- 4 483 886
- US-A1- 2002 033 131

## Description

Le domaine de l'invention concerne la fabrication et la préparation de profilés réalisés à l'aide d'un gel thermoplastique élastomère selon la revendication 1.

Les gels thermoplastiques élastomères sont des matériaux caractérisés par une très faible dureté, un comportement élastique, c'est-à-dire qu'ils retrouvent leur forme initiale après une déformation, même de grande amplitude, et une température de ramollissement au-delà de laquelle ils deviennent plastiques, ce qui facilite leur mise en oeuvre.

De tels gels peuvent notamment avoir comme matrice des élastomères thermoplastiques (TPE) et en particulier des élastomères thermoplastiques styréniques (dit TPS), tels que les copolymères blocs styrène/butadiène (SB), les styrène/isoprène (SI), les styrène/isobutylène (SIB), les styrène/éthylène/propylène (SEP), les styrène/éthylène/butylène (SEB), ou encore, les styrène/butadiène/styrène (SBS), les styrène/isoprène/styrène (SIS), les styrène/butadiène/isoprène/styrène (SBIS), les styrène/isobutylène/styrène (SIBS), les styrène/éthylène/butylène/styrène (SEBS), les styrène/éthylène/propylène/styrène (SEPS), les styrène/éthylène/éthylène/propylène/styrène (SEEPS), et les mélanges de ces copolymères.

Pour obtenir une très faible dureté, ces gels comportent aussi des huiles d'extension en proportion élevée. En règle générale, l'huile d'extension est introduite dans ces gels à proportion de 200 pce (pour cent d'elastomère en masse) ou plus.

Toutefois, le stockage, la manutention et la préparation de ces gels en vue de leur transformation, présente des difficultés spécifiques. Plus particulièrement, le problème se pose lorsque l'on cherche à former des granulats ou des pellets de petite taille destinés à l'alimentation des moyens classiques de transformation des thermoplastiques.

Il est connu de l'état de la technique d'enrober ces produits d'agents anticollants afin d'éviter leur agglomération durant ces phases industrielles.

Classiquement, les agents anticollants sont choisis parmi les matériaux finement divisés tels que la silice, le talc, le mica, l'oxyde de zinc ou le stéarate de zinc. Ces agents peuvent être employés à l'état pur ou sous la forme de mélange dans lequel on retrouve une proportion majoritaire supérieure à 80% d'un des agents anticollants ci-dessus.

Le dépôt des agents anticollants sur la surface des pellets ou des granulats de gels thermoplastiques, peut se faire par mise en contact de poudre, par projection d'une solution ou par trempage dans un liquide formé d'une suspension à haute concentration de l'agent anticollant en question.

Le problème posé par l'utilisation des agents anticollants de toute nature, réside dans le fait que ces produits, lorsqu'ils sont présents au-delà d'une certaine proportion, modifient de manière sensible les propriétés des gels thermoplastiques telles que par exemple, le module d'élasticité ou la capacité d'élongation. Aussi, une attention particulière est nécessaire lorsque l'on désire déposer un agent anticollant à la surface de ces matériaux.

À cet effet, il a été mis en évidence, que la quantité maximale d'agent anticollant déposée à la surface d'un granulat ou d'un pellet est sensiblement constante en volume pour une granulométrie donnée des particules formant l'agent anticollant. Ce volume par unité de surface représente le volume de saturation.

On observe également que la quantité d'agent anticollant qu'il est nécessaire de déposer à la surface d'un granulat ou d'un pellets pour obtenir les propriétés suffisantes à la manutention de ces granulats ou de ses pellets correspond sensiblement au volume de saturation.

Ce volume maximum par unité de surface augmente de façon croissante entre 2 cm³ et 8 cm³ par m² lorsque la granulométrie des particules formant l'agent anticollant augmente de 1 µm à 100 µm. Plus la poudre est fine, et moins le volume nécessaire pour saturer la surface du granulat ou du pellet est important.

La granulométrie pouvant avoir une incidence sur les résultats annoncés ci-dessus, aussi, on utilisera donc des agents anticollants se présentant sous la forme de poudres dont les particules ont une taille moyenne comprise entre 1 µm et 100 µm, et de préférence comprise entre 1 µm et 50 µm, ce qui correspond à la taille des particules des poudres du type ci-dessus usuellement disponibles dans le commerce.

On observe également que, lorsque la quantité d'agent anticollant est inférieure au volume de saturation, les granulats ou les pellets ont tendance à s'agglutiner les uns avec les autres pour former des agglomérats qu'il est difficile de séparer.

Ainsi, la quantité minimale d'agent anticollant à déposer à la surface des granulats et des pellets pour supprimer le collant des granulats ou des pellets entre eux, correspond sensiblement à la quantité maximale qu'il est possible de faire tenir sur cette surface.

L'objet de l'invention consiste à tirer parti de ces phénomènes pour dimensionner la taille minimale et la forme des granulats ou des pellets destinés à l'alimentation des moyens de mise en forme du gel en fabrication.

En effet, il a été considéré que la quantité en volume d'agent anticollant ne devait pas dépasser un seuil fixé à 0,3% du volume de gel, et par voie de conséquence de la masse de gel contenue dans un granulat ou un pellet. Il résulte de cette situation un dimensionnement minimal précis de la forme et de la taille des pellets ou des éléments de granulat pour respecter le seuil en question.

En désignant par C la compacité d'un granulat ou d'un pellet, la compacité s'exprimant en m⁻¹, et étant définie comme le rapport entre la surface et le volume dudit pellet ou granulat, on obtient une valeur maximale de la compacité C à observer de manière à ne pas dépasser la valeur de seuil de 0,3% en volume d'agent anticollant présent dans un volume donné de gel thermoplastique.

La valeur maximale de la compacité décroît d'une valeur de 1500 m⁻¹ lorsque la granulométrie des particules formant l'agent anticollant est minimale et d'environ 1 µm, à une valeur de 375 m⁻¹ lorsque la granulométrie des particules est à sa valeur supérieure de 100 µm, en exprimant les caractéristiques géométriques du pellet ou de l'élément de granulat en mètres.

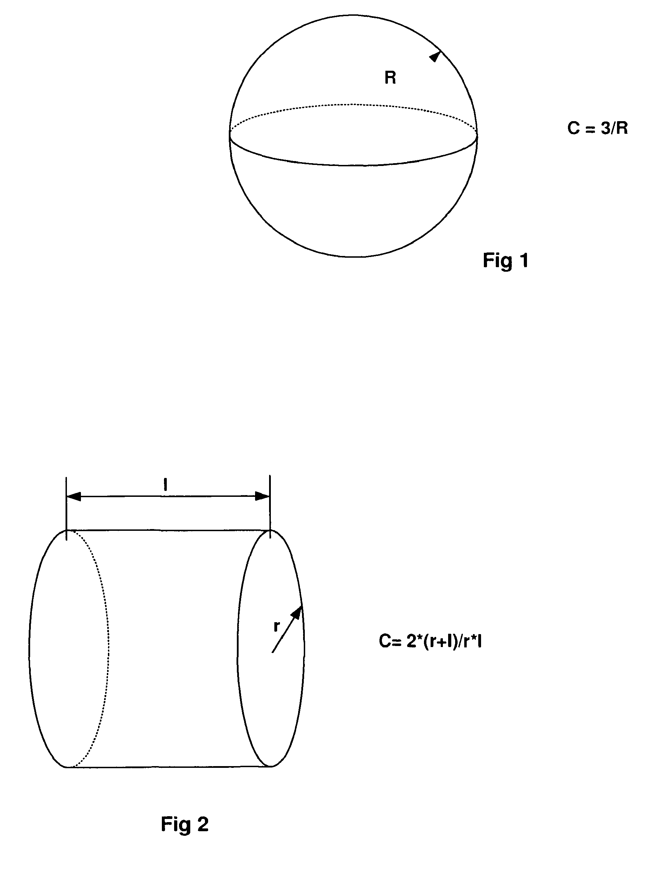

Ainsi, pour des pellets ou des granulats de forme sphérique, tels que représentés à la figure 1, de rayon R, dont la compacité est égale à 3/R, la valeur minimale du rayon du pellet ou du granulat sera de 2 mm pour un agent anticollant comprenant des particules d'une granulométrie moyenne de 1 µm, et de 8 mm pour un agent anticollant comprenant des particules d'une granulométrie moyenne de 100 µm.

De manière plus pratique, on cherchera à réaliser les pellets ou les granulats en sectionnant un cordon continu sensiblement cylindrique de diamètre donné, de manière à obtenir des pellets ou des éléments de granulats de forme sensiblement cylindrique de longueur I et de rayon r, tel que représenté à la figure 2, et pour lequel la compacité C = 2 (r+l)/r*l.

Ainsi, pour un cordon cylindrique de 2 cm de diamètre, la longueur minimale des pellets ou des granulats sera de 0,15 cm pour un agent anticollant dont les particules ont une taille moyenne de 1 µm, et de 1,15 cm lorsqu'on utilisera un agent anticollant dont les particules ont une taille moyenne de 100 µm.

On observera que, pour un cordon cylindrique de 1 cm de diamètre, la longueur minimale des pellets ou des granulats est de 0,18 cm pour un agent anticollant dont les particules ont une taille moyenne de 1 µm. Toutefois, dans ce cas précis, lorsqu'on utilise un agent anticollant de forte granulométrie, il n'est plus possible d'augmenter la longueur du pellet ou du granulat pour respecter le seuil maximal de 0,3%. Dans le cas précis d'un cordon de 1 cm de diamètre il conviendra alors de choisir un anticollant de granulométrie inférieure à 100 µm de manière à augmenter la valeur maximale de la compacité C, afin d'obtenir une valeur de la longueur minimale de la longueur I inférieure à des valeurs trop importantes. Ainsi, en abaissant la granulométrie des particules d'anticollant à 70 µm, on obtient une valeur maximale de la compacité de l'ordre de 500 m⁻¹, ce qui permet d'obtenir une valeur minimale de la longueur I des pellets ou des granulats de 2 cm.

Si l'on souhaite réduire la taille du granulat ou du pellet au maximum, il convient alors d'utiliser un anticollant dont la taille des particules sera la plus faible possible. A titre d'exemple, pour une taille de particule de l'ordre de 1 µm pour lesquels la compacité maximum est de 1500 m⁻¹, on peut réaliser des granulats ou des pellets cylindriques de 4mm de diamètre et d'une longueur I de 4mm.

Une application des règles décrites ci-dessus peut aussi s'avérer intéressante lorsque l'alimentation du moyen d'extrusion se fait à l'aide d'un cordon sensiblement cylindrique continu. Dans ce cas, la longueur du cordon peut être considérée comme infinie et la compacité C est alors égale à 2/r. Il en résulte une valeur minimale du rayon r de 1,3 mm lorsque la taille des particules d'anticollant est en moyenne de 1 µm, et de 5,3 mm lorsque la taille des particules d'anticollant est en moyenne de 100 µm.

Les éléments de granulats réalisés selon le procédé décrit ci-dessus peuvent être manutentionnés aisément sans former d'agglomérats. Ils permettent entre autre, en raison de l'optimisation de leur taille, d'alimenter les machines de fabrication de profilés sous forme de granulats sans introduire de modifications majeures de l'alimentation de ces machines pour y introduire les éléments entrants.

On observera que des lois identiques s'appliquent aux produits profilés issus de ces machines. Lorsqu'il est nécessaire de manutentionner lesdits profilés avant leur manutention finale, on appliquera les enseignements de la présente description pour que le produit final ne comporte pas, en pourcentage de sa masse, un excès d'agent anticollant de nature à en dénaturer les propriétés.

## Revendications

1. Procédé de fabrication de granulats ou de bandes continues destinés à l'alimentation d'une machine d'extrusion, formés d'un gel comportant au moins, à titre d'élastomère majoritaire un thermoplastique élastomère styrénique et plus de 200 pce d'une huile d'extension, chaque élément du granulat ayant une surface donnée, **caractérisé en ce qu'**on dimensionne l'élément de granulat pour que la compacité, d'un élément de granulat, soit inférieure à une valeur décroissante de 1500 m⁻¹ à 375 m⁻¹ et **en ce qu'**on dépose à la surface desdits granulats un agent anticollant d'une valeur croissante de 2 cm³ à 8 cm³ par m² de surface de granulat, lorsque la taille moyenne des particules dudit agent anticollant augmente d'une valeur de 1 µm à 100 µm.

2. Procédé de fabrication selon la revendication 1 dans lequel la taille moyenne des particules dudit agent anticollant est comprise entre de 1 µm à 50 µm.

3. Procédé de fabrication selon la revendication 1 dans lequel l'élastomère styrénique est choisi parmi les élastomères tels que :
- les styrène/butadiène (SB),
- les styrène/isoprène (SI),
- les styrène/isobutylène (SIB),
- les styrène/éthylène/propylène (SEP),
- les styrène/éthylène/butylène (SEB),
- les styrène/butadiène/styrène (SBS),
- les styrène/isoprène/styrène (SIS),
- les styrène/butadiène/isoprène/styrène (SBIS),
- les styrène/iso butylène/styrène (SIBS),
- les styrène/éthylène/butylène/styrène (SEBS),
- les styrène/éthylène/propylène/styrène (SEPS),
- les styrène/éthylène/éthylène/propylène/styrène (SEEPS)
et les mélanges de ces copolymères.

4. Procédé de fabrication selon l'une des revendications 1 ou 2 dans lequel, l'agent anticollant contient une proportion supérieure à 80% de silice, de mica, de talc ou de stéarate de zinc.

5. Procédé de fabrication selon l'une des revendications 1 à 4 dans lequel, les éléments de granulats ont une forme sensiblement cylindrique.

6. Procédé de fabrication selon la revendication 5 dans lequel les éléments de granulats sont obtenus en sectionnant des tronçons d'une bande continue de forme généralement cylindrique.

## Patentansprüche

1. Verfahren zur Herstellung von Granulaten oder Endlosbändern, die zur Speisung einer Extrusionsmaschine vorgesehen sind und aus einem Gel, das mindestens ein thermoplastisches Styrolelastomer als Hauptelastomer und mehr als 200 phe eines Strecköls umfasst, gebildet sind, wobei jedes Element des Granulats eine gegebene Oberfläche aufweist, **dadurch gekennzeichnet, dass** man das Granulatelement so bemisst, dass die Kompaktheit eines Granulatelements unter einem Wert, der von 1500 m⁻¹ bis 375 m⁻¹ abnimmt, liegt, und auf der Oberfläche der Granulate ein Antiklebemittel mit einem Wert, der von 2 cm³ bis 8 cm³ pro m² Granulatoberfläche zunimmt, abscheidet, wenn die mittlere Größe der Teilchen des Antiklebemittels von einem Wert von 1 µm bis 100 µm ansteigt.

2. Herstellungsverfahren nach Anspruch 1, bei dem die mittlere Größe der Teilchen des Antiklebemittels zwischen 1 µm und 50 µm liegt.

3. Herstellungsverfahren nach Anspruch 1, bei dem das Styrolelastomer unter Elastomeren wie:
- Styrol/Butadien (SB),
- Styrol/Isopren (SI),
- Styrol/Isobutylen (SIB),
- Styrol/Ethylen/Propylen (SEP),
- Styrol/Ethylen/Butylen (SEB),
- Styrol/Butadien/Styrol (SBS),
- Styrol/Isopren/Styrol (SIS),
- Styrol/Butadien/Isopren/Styrol (SBIS),
- Styrol/Isobutylen/Styrol (SIBS),
- Styrol/Ethylen/Butylen/Styrol (SEBS),
- Styrol/Ethylen/Propylen/Styrol (SEPS),
- Styrol/Ethylen/Ethylen/Propylen/Styrol (SEEPS),
und Mischungen dieser Copolymere ausgewählt ist.

4. Herstellungsverfahren nach einem der Ansprüche 1 oder 2, bei dem das Antiklebemittel einen Anteil von mehr als 80% an Siliciumdioxid, Glimmer, Talk oder Zinkstearat enthält.

5. Herstellungsverfahren nach einem der Ansprüche 1 bis 4, bei dem die Granulatelemente eine weitgehend zylindrische Form aufweisen.

6. Herstellungsverfahren nach Anspruch 5, bei dem die Granulatelemente durch Abschneiden von Stücken von einem Endlosband allgemein zylindrischer Form erhalten werden.

## Claims

1. Method of manufacturing granulates or continuous strips intended for feeding an extrusion machine, formed of a gel comprising at least, as majority elastomer, a styrene thermoplastic elastomer and more than 200 phr of an extender oil, each element of the granulate having a given surface area, **characterized in that** the granulate element is dimensioned so that the compactness, of a granulate element, is less than a value decreasing from 1500 m⁻¹ to 375 m⁻¹ and **in that** deposited on the surface of said granulates is an anti-tack agent having a value increasing from 2 cm³ to 8 cm³ per m² of granulate surface area, when the mean size of the particles of said anti-tack agent increases from a value of 1 µm to 100 µm.

2. Manufacturing method according to Claim 1, in which the mean size of the particles of said anti-tack agent is between 1 µm and 50 µm.

3. Manufacturing method according to Claim 1, in which the styrene elastomer is chosen from elastomers such as:
- styrene/butadiene (SB),
- styrene/isoprene (SI),
- styrene/isobutylene (SIB),
- styrene/ethylene/propylene (SEP),
- styrene/ethylene/butylene (SEB),
- styrene/butadiene/styrene (SBS),
- styrene/isoprene/styrene (SIS),
- styrene/butadiene/isoprene/styrene (SBIS),
- styrene/isobutylene/styrene (SIBS),
- styrene/ethylene/butylene/styrene (SEBS),
- styrene/ethylene/propylene/styrene (SEPS),
- styrene/ethylene/ethylene/propylene/styrene (SEEPS),
and blends of these copolymers.

4. Manufacturing method according to either of Claims 1 and 2, in which the anti-tack agent contains a greater than 80% proportion of silica, mica, talc or zinc stearate.

5. Manufacturing method according to one of Claims 1 to 4, in which the granulate elements have a substantially cylindrical shape.

6. Manufacturing method according to Claim 5, in which the granulate elements are obtained by cutting sections of a continuous strip of generally cylindrical shape.
